# EUROPEAN PATENT APPLICATION

(11) **EP 4 715 895 A2**
(43) Date of publication of application: **25.03.2026**
(21) Application number: 26156462.9
(22) Date of filing: 28.06.2021
(51) Int. Cl.: H01M 4/139

(54) **CURRENT COLLECTOR COMPRISING PRIMER COATING LAYER HAVING IMPROVED ADHESIVE STRENGTH, AND MANUFACTURING METHOD FOR SAME**

(30) Priority: 28.08.2020 KR 20200109410
(62) Divisional of application: 25181181.6
(71) Applicant: LG Energy Solution, Ltd., Seoul 07335 (KR)
(72) Inventor: HAN, Hyun Gyu, 34122 DAEJEON (KR)
(74) Representative: Plasseraud IP

(57) **Abstract**

The present invention relates to a current collector having improved adhesive strength, and is a structure comprising a metal foil and a primer coating layer formed on at least one surface of the metal foil, wherein the surface of the primer coating layer is a flat surface that is rolled so as to be evenly flat.

## Description

### [Technical Field]

This application claims the benefit of priority based on Korean Patent Application No. 10-2020-0109410, filed on August 28, 2020, and the entire contents of the Korean patent application are incorporated herein by reference.

The present invention relates to a current collector including a primer coating layer and a method of manufacturing the same, and more particularly, to a current collector including a primer coating layer having improved adhesive force, and a method of manufacturing the same.

### [Background Art]

Recently, secondary batteries capable of charging and discharging have been widely used as energy sources of wireless mobile devices. In addition, the secondary battery has attracted attention as an energy source of an electric vehicle, a hybrid electric vehicle, etc., which are proposed as a solution for air pollution of existing gasoline vehicles and diesel vehicles using fossil fuel. Therefore, the types of applications using the secondary battery are currently much diversified due to the advantages of the secondary battery, and it is expected that the secondary battery will be applied to many fields and products in the future.

Such secondary batteries may be classified into lithium ion batteries, lithium ion polymer batteries, lithium polymer batteries, etc., depending on the composition of the electrode and the electrolyte, and among them, the amount of use of lithium-ion polymer batteries that are less likely to leak electrolyte and are easy to manufacture is on the increase. In general, secondary batteries are classified into cylindrical batteries and prismatic batteries in which an electrode assembly is embedded in a cylindrical or rectangular metal can, depending on the shape of a battery case, and pouch-type batteries in which the electrode assembly is embedded in a pouch-type case of an aluminum laminate sheet. The electrode assembly built into the battery case is composed of a positive electrode, a negative electrode, and a separator interposed between the positive electrode and the negative electrode, and is a power generating element capable of charging and discharging. The electrode assembly is classified into a jelly-roll type wound with a separator interposed between the positive electrode and the negative electrode which are long sheet-shaped and are coated with active materials, and a stack type in which a plurality of positive electrodes and negative electrodes of a predetermined size are sequentially stacked while a separator is interposed therebetween.

Further, the electrode used for such a secondary battery generally has a structure where an electrode active material layer is formed by applying an electrode slurry containing an electrode active material on a current collector and then performing a drying and rolling process. In this case, a binder is contained in the electrode slurry, but even in this case, a problem occurs due to the decrease of the binding force between the current collector and the electrode active material layer.

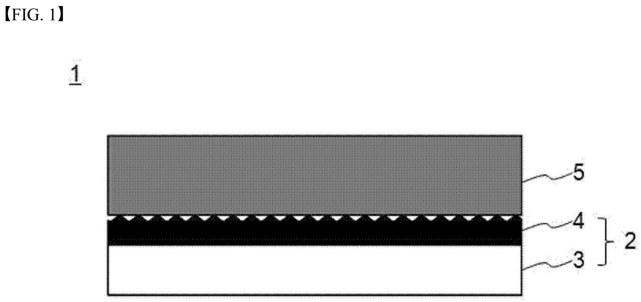

FIG. 1 is a cross-sectional view showing a structure of an electrode and a current collector having a primer coating layer according to a conventional art. Referring to FIG. 1, in the conventional electrode 1, an electrode active material layer 5 is formed on a current collector 2, but a primer coating layer 4 may be formed on a metal foil 3 forming the current collector 2 in order to prevent the decrease of the adhesive force between the current collector 2 and the electrode active material layer 5.

However, the primer coating layer 4 may be formed on the metal foil 3, it is generally formed in a manner that a slurry for forming the primer coating layer 4 is applied on the metal foil 3 using a roller, etc. In this case, the surface of the primer coating layer 4 comes to have a non-uniform shape after coating.

Likewise, when the surface of the primer coating layer 4 comes to have a non-uniform shape, if an electrode 1 is later manufactured by forming an electrode active material layer 5 on the primer coating layer 4, a space is formed between the electrode active material layer 5 and the primer coating layer 4, thereby causing the decrease of the adhesive force between electrode interfaces and deterioration of electrode performance such as an output.

Therefore, there is a need for technology development for solving the problem.

### [Disclosure]

### [Technical Problem]

An object of the present invention is to provide a current collector having improved adhesive force between an electrode active material layer and a primer coating layer, and a method of manufacturing the same.

### [Technical Solution]

A current collector according to an embodiment of the present invention includes: a metal foil; and a primer coating layer formed on at least one surface of the metal foil, wherein a surface of the primer coating layer has a flat surface uniformly planarized by rolling.

In a specific example, the primer coating layer includes a carbon-based material and a binder.

In another embodiment of the present invention, a surface of the metal foil has irregularities formed by a rolling of the primer coating layer.

In further another embodiment of the present invention, the current collector of the present invention further includes a binder layer formed on the primer coating layer.

In a specific example, the binder layer includes a carbon-based material and a binder, and a binder content of the binder layer is greater than a binder content of the primer coating layer.

In a specific example, a thickness of the binder layer is smaller than a thickness of the primer coating layer.

In a specific example, the binder layer may be pattern-formed on a part of the primer coating layer.

Further, the present invention provides an electrode including a current collector as described above, and the electrode has a structure where an electrode active material layer is formed on the current collector as described above.

Further, the present invention provides a method of manufacturing a current collector as described above. A method of manufacturing a current collector according to an embodiment of the present invention includes: preparing a metal foil; forming a primer coating layer by coating a primer composition on at least one surface of the metal foil; and rolling the metal foil having a primer coating layer formed thereon to thereby uniformly planarize a surface of the primer coating layer.

In a specific example, the primer composition includes a carbon-based material and a binder.

In another embodiment of the present invention, irregularities are formed on a surface of the metal foil by a rolling of the primer coating layer.

A method of manufacturing a current collector according to further another embodiment of the present invention further includes forming a binder layer by coating a binder composition on the primer coating layer.

In a specific example, the binder composition includes a carbon-based material and a binder, and a binder content of the binder composition is greater than a binder content of the primer composition.

In a specific example, a thickness of the binder layer is smaller than a thickness of the primer coating layer.

In a specific example, the binder composition is pattern-coated on a part of the primer coating layer.

Further, the present invention provides a method of manufacturing an electrode including a method of manufacturing a current collector as described above. The method of manufacturing an electrode includes: manufacturing a current collector according to the method of manufacturing a current collector as described above; and applying an electrode slurry containing an electrode active material on the current collector to thereby form an electrode active material layer.

### [Advantageous Effects]

According to the present invention, a primer coating layer is formed on a current collector, and by rolling the primer coating layer, the surface of the primer coating layer is planarized, and the pores inside the primer coating layer may be minimized. Through this, the adhesive force of the interface between the primer coating layer and the electrode active material layer may be improved, and the performance deterioration of the electrode may be prevented.

Further, by making the thickness of the current collector uniform, the productivity and processability of the electrode may be improved.

### [Brief Description of the Drawings]

FIG. 1 is a cross-sectional view showing a structure of an electrode and a current collector having a primer coating layer according to a conventional art.
FIG. 2 is a cross-sectional view illustrating a structure of a current collector according to an embodiment of the present invention.
FIG. 3 is a cross-sectional view illustrating a structure of a current collector according to another embodiment of the present invention.
FIG. 4 is a cross-sectional view illustrating a structure of a current collector according to further another embodiment of the present invention.
FIG. 5 is a cross-sectional view illustrating a structure of an electrode according to an embodiment of the present invention.
FIG. 6 is a flowchart illustrating the order of the method of manufacturing a current collector according to the present invention.
FIG. 7 is a schematic diagram illustrating a method of manufacturing a current collector according to an embodiment of the present invention.
FIG. 8 is a schematic diagram illustrating a method of manufacturing a current collector according to another embodiment of the present invention.
FIG. 9 is a schematic diagram illustrating a method of manufacturing a current collector according to further another embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail with reference to the drawings.

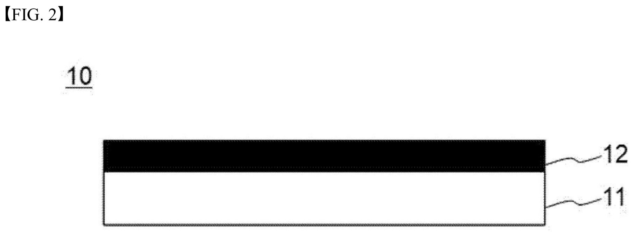

FIG. 2 is a cross-sectional view illustrating a structure of a current collector according to an embodiment of the present invention.

Referring to FIG. 2, a current collector 10 according to an embodiment of the present invention includes: a metal foil 11; and a primer coating layer 12 formed on at least one surface of the metal foil 11, and the surface of the primer coating layer 12 has a structure where a flat surface uniformly planarized by rolling is formed.

As described above, the primer coating layer may be formed on the metal foil, it is generally formed in a manner that a slurry for forming the primer coating layer is applied on the metal foil using a roller, etc. In this case, the surface of the primer coating layer comes to have a non-uniform shape after coating.

Likewise, in the case that the surface of the primer coating layer comes to have a non-uniform shape, when coating an electrode active material on the primer coating layer later, a gap is formed between the electrode active material layer and the primer coating layer as shown in FIG. 1, thereby causing a decrease of the adhesive force between electrode interfaces and deterioration of the electrode performance such as an output.

According to the present invention, a primer coating layer is formed on a current collector, and by rolling the primer coating layer, the surface of the primer coating layer is planarized, and the pores inside the primer coating layer may be minimized. Through this, the adhesive force of the interface between the primer coating layer and the electrode active material layer may be improved, and the performance deterioration of the electrode may be prevented.

Referring to FIG. 2, the current collector 10 according to an embodiment of the present invention has a structure that the primer coating layer 12 is formed on the metal foil 11. Further, the current collector may be a positive electrode current collector or a negative electrode current collector.

In the case of the positive electrode current collector, the metal foil 11 generally has a thickness of 3 to 500 micrometers. The metal foil is not particularly limited as long as it has high conductivity without causing a chemical change in the battery. For example, the current collector may be made of a metal such as stainless steel, aluminum, nickel, titanium, sintered carbon, or aluminum or stainless steel of which the surface is treated with carbon, nickel, titanium, or silver, or the like. The metal foil may have fine irregularities on the surface thereof to increase the adhesion of the positive electrode active material, and various forms such as a film, a sheet, a foil, a net, a porous body, a foam, and a nonwoven fabric are possible.

In the case of the negative electrode current collector, the metal foil 11 generally has a thickness of 3 to 500 micrometers. The metal foil is not particularly limited as long as it has conductivity without causing chemical changes in the battery. Examples of the negative electrode current collector include copper, stainless steel, aluminum, nickel, titanium, sintered carbon, copper or stainless steel of which the surface has been treated with carbon, nickel, titanium, silver or the like, an aluminum-cadmium alloy, or the like. In addition, like the positive electrode current collector, fine unevenness can be formed on the surface of the metal foil to enhance the bonding force of the negative electrode active material, and it can be used in various forms such as a film, a sheet, a foil, a net, a porous body, a foam, and a nonwoven fabric.

Further, the primer coating layer 12 increases the adhesive force of the electrode active material layer to the current collector while suppressing the increase of the internal resistance of the electrode as much as possible, and may contain a carbon-based material in order to enhance the electrical conductivity between the electrode active material layer and the metal foil to be described later. Referring to FIG. 2, a primer coating layer 12 is formed only on one surface of a metal foil 11. Herein, when manufacturing an electrode where an electrode active material layer is formed on both surfaces of the metal foil 11, the primer coating layer 12 may be formed on both surfaces of the metal foil 11.

The carbon-based material is not particularly limited as long as it is an element which maintains conductivity by electrically connecting the metal foil 11 to the electrode active material layer. For example, the carbon-based material may be one or more selected from the group consisting of natural graphite, artificial graphite, graphene, carbon black, denka black, acetylene black, ketjen black, super-P, channel black, furnace black, lamp black, summer black, carbon nanotube, graphite nanofiber, and carbon nano fiber.

Further, the primer coating layer 12 may fix a carbon-based material as described above on the metal foil 11 and form a coating film, and may further include a binder for coupling the metal foil 11 with the electrode active material layer.

There is no particular limitation to the type of the binder as long as it can exhibit binding force. For example, the binder may include one or more selected from the group consisting of polyvinylidene fluoride, polyvinyl alcohol, carboxymethylcellulose (CMC), starch, hydroxypropylcellulose (HPC), regenerated cellulose, polyvinylpyrrolidone, polytetrafluoroethylene, polyethylene, polypropylene, ethlylene propylene diene monomer (EPDM), sulfonated EPDM, styrene butadiene, and fluorine rubber.

When the primer coating layer 12 contains a binder together with a carbon-based material, the weight ratio of the carbon-based material and the binder may be 3: 7 to 7: 3, and specifically 4: 6 to 6: 4. When the weight ratio of the carbon-based material and the binder is in the above range, the electrical conductivity and binding force of the primer coating layer 12 may appropriately be secured. Specifically, when the weight ratio of the carbon-based material and the binder is less than the above range, the content of the conductive material is excessively small, and thus the operation characteristics of the battery are degraded by the increase of the internal resistance. On the contrary, if the weight ratio exceeds the above range, the content of the binding material is excessively small, and thus sufficient binding force cannot be obtained.

Further, the primer coating layer 12 may further contain inorganic particles such as aluminum, nickel, zinc oxide, titanic acid potassium, and titanium oxide in order to additionally secure electrical conductivity.

The thickness of the primer coating layer 12 is in a range of 0.1 to 10 µm, specifically 0.1 to 5 µm, and more specifically 0.1 to 1 µm. If the thickness of the primer coating layer 12 is less than the range, binding force cannot be sufficiently secured between the metal foil 11 and the electrode active material layer, and it is difficult to form a uniform layer. On the contrary, if the thickness exceeds the range, the primer coating layer 12 acts as a resistance, thereby deteriorating the electrical performance of the electrode or increasing the volume of the electrode.

A method of forming a coating layer generally used in the related art may be used as the method of forming the primer coating layer. For example, wet coating methods such as gravure coating, slot die coating, spin coating, spray coating, bar coating, and deposition coating; and dry coating methods such as thermal evaporation, e-beam evaporation, chemical vapor deposition (CVD), and sputtering may be used.

At this time, in the present invention, the surface of the primer coating layer 12 has a structure where a flat surface uniformly planarized by rolling is formed. Herein, the surface of the primer coating layer 12 means an opposite surface of a surface where the primer coating layer contacts the metal foil 11. Namely, when a primer coating layer 12 is formed on the metal foil 11, fine irregularities are formed on the surface. At this time, a flat surface may be formed by pressing the fine irregularities by rolling. Namely, the current collector 10 may improve the adhesive force between the primer coating layer 12 and the electrode active material layer by preventing the above fine irregularities from acting as bubbles in a space between the primer coating layer 12 and the electrode active material layer.

Herein, for example, the metal foil 11, where the primer coating layer 12 is formed, may be rolled by a pair of rolling rollers. Herein, the rolling method is not limited thereto, and various known rolling methods may be used.

On the other hand, the surface roughness (Ra) of the primer coating layer 12 may be 0.01 to 1 µm, and specifically, 0.1 to 0.5 µm. Herein, the surface roughness (Ra) is also called "center line average", and is the average of absolute values of lengths of from the center line of the roughness curve to the cross-section curve of the surface, within a reference length.

If the surface roughness is less than the above range, the surface area of the primer coating layer 12 becomes excessively small, and the adhesive force between the primer coating layer 12 and the electrode active material layer may be reduced. If the surface roughness exceeds the above range, bubbles may be formed between the electrode active material layer and the primer coating layer 12 when forming the electrode active material layer.

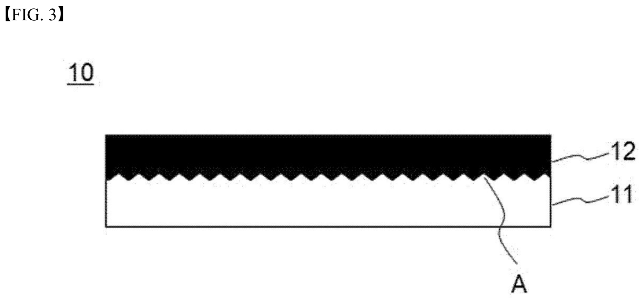

FIG. 3 is a cross-sectional view illustrating a structure of a current collector according to another embodiment of the present invention.

Referring to FIG. 3, the surface of the metal foil 11 may have a structure where irregularities (A) are formed by a rolling of the primer coating layer 12. Specifically, when a metal foil 11, where a primer coating layer 12 is formed, is rolled to planarize the surface of the primer coating layer 12, irregularities (A) may be formed on the surface of the metal foil 11 as particles constituting the primer coating layer 12 press the metal foil 11. Such irregularities (A) may improve the binding force between the primer coating layer 12 and the metal foil 11. As such, irregularities of a predetermined size may be formed on the metal foil 11 by appropriately adjusting the size (e.g., average particle diameter) and strength of particles constituting the primer coating layer 12, that is, the carbon-based material, etc.

At this time, the surface state of the primer coating layer 12 and the metal foil 11 and the thickness of the primer coating layer 12 may be determined according to the rolling degree of the primer coating layer 12. The rolling degree may be appropriately designed according to the specification of the current collector intended to be manufactured. Specifically, the primer coating layer 12 may be rolled in the rolling strength of 5 to 200 MPa, and specifically 50 to 100 MPa. Further, the rolling rate of the primer coating layer 12 may be 50 to 90%, specifically 60 to 80%. Herein, the rolling rate means a percentage which is obtained by dividing the difference between the density (G1) of the primer coating layer before rolling and the density (G2) of the primer coating layer after rolling by the density (G1) of the primer coating layer before rolling and may be calculated by {(G2-G1)/G1}*100.

Further, the porosity of the primer coating layer after rolling may be 10% or less, specifically 5% or less, and more specifically 3% or less. Namely, the porosity of the primer coating layer is preferably as small as possible in terms of binding property and electrical conductivity.

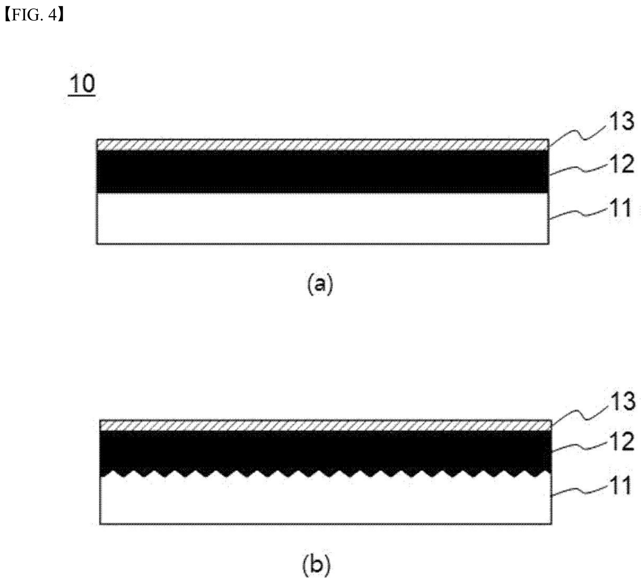

FIG. 4 is a cross-sectional view illustrating a structure of a current collector according to further another embodiment of the present invention.

Referring to FIG. 4, the current collector 10 according to another embodiment of the present invention further includes a binder layer 13 formed on the primer coating layer 12. FIG. 4(a) shows that a binder layer is formed on the current collector according to FIG. 2, and FIG. 4(b) shows that a binder layer is formed on a current collector having a structure that irregularities are formed on the surface of a metal foil as shown in FIG. 3. Referring to FIG. 4, as the primer coating layer 12 is formed only on one surface of the metal foil 11, the binder layer 13 is also formed on one surface of the metal foil 11. Herein, if the primer coating layer 12 is formed on both surfaces of the metal foil 11, the binder layer 13 may also be formed on both surfaces of the metal foil 11.

As such, the binder layer 13 imparts additional adhesive force to the electrode active material layer in a space between the primer coating layer 12 and the electrode active material layer to be described later.

The binder layer 13 may include a carbon-based material and a binder. At this time, the carbon-based material is used to secure electrical conductivity between the primer coating layer 12 and the metal foil 11 and the electrode active material layer, and the binder is used to couple the primer coating layer 12 with the electrode active material layer. The same as described above may be used as the carbon-based material and the binder, the same as the carbon-based material and the binder used for the primer coating layer 12 may be used, or different kinds may also be used.

Further, in the binder layer 13, the weight ratio of the carbon-based material and the binder may be 0: 10 to 7: 3, and specifically 1: 9 to 6: 4. Namely, the binder layer 13 may contain both the carbon-based material and the binder and may contain only the binder. When the weight ratio of the carbon-based material and the binder is in the above range, the electrical conductivity and binding force of the binder layer 13 may appropriately be secured. Herein, in order to secure sufficient binding force, the content of the binder is preferably greater than the binder content in the primer coating layer 12. Herein, the content of the binder may be a ratio of the weight of the binder to the total weight of each layer.

Further, the thickness of the binder layer 13 is in a range of 0.1 to 5 µm, specifically 0.1 to 3 µm, and more specifically 0.1 to 2 µm. Herein, in this case, in order to secure sufficient electrical conductivity between the metal foil 11 and the primer coating layer 12 and the electrode active material layer, the thickness of the binder layer 13 is preferably smaller than the thickness of the primer coating layer 12. When the thickness of the binder layer 13 is less than the above range, it may be difficult to secure binding force to the electrode active material layer, and when the thickness of the binder layer 13 exceeds the range, it may be difficult to sufficiently secure electrical conductivity between the metal foil 11 and the primer coating layer 12 and the electrode active material layer as the binder layer acts as a resistance.

Further, since the binder layer 13 uses a large amount of binder, compared to the primer coating layer 12, the binder layer 13 may reduce the electrical conductivity between the metal foil 11 and primer coating layer 12 and the electrode active material layer. Hence, the binder layer 13 should be formed in the minimum amount for securing the binding force on the primer coating layer 12. As such, the binder layer 13 may be pattern-formed on a part of the primer coating layer 12. Specifically, the binder layer 13 may be formed at a portion which is frequently separated due to weak binding force between the primer coating layer 12 and the electrode active material layer. For example, the binder layer 13 may be pattern-formed at both edge portions of the primer coating layer 12.

In addition, the present invention provides an electrode including a current collector according to the present invention.

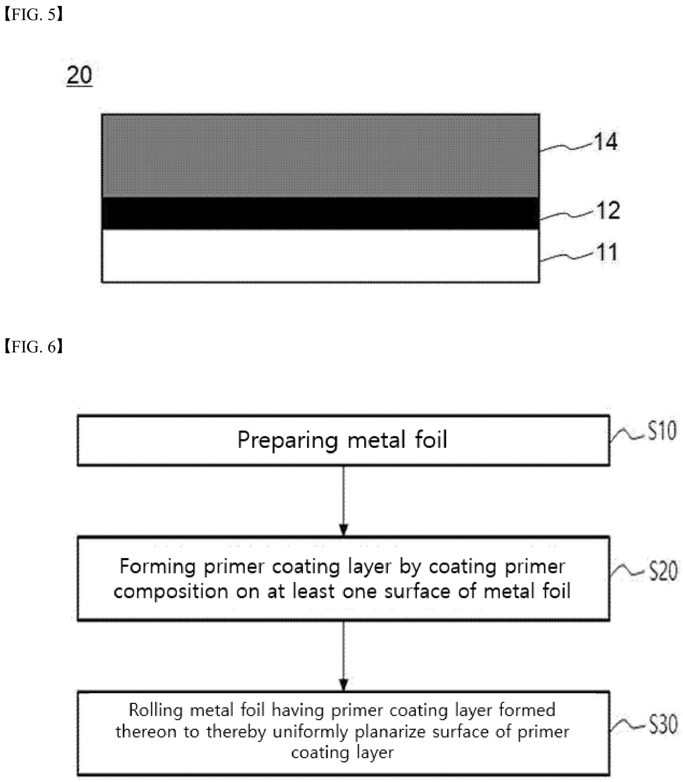

FIG. 5 is a cross-sectional view illustrating a structure of an electrode according to an embodiment of the present invention.

Referring to FIG. 5, the electrode 20 according to the present invention includes a current collector 10 as described above, and the electrode 20 has a structure where an electrode active material layer 14 is formed on the current collector 10. Namely, the electrode 20 has a structure in which the primer coating layer 12 and the electrode active material layer 14 are sequentially stacked on the metal foil 11, and the surface of the primer coating layer 12 may have a structure in which a flat surface planarized by rolling is formed. Further, though not illustrated in FIG. 5, irregularities may be formed on the surface of the metal foil 11 according to the rolling condition. Further, the binder layer 13 may be formed on the primer coating layer 12, and the electrode active material layer 14 may be formed on the binder layer 13. At this time, the electrode active material layer 14 may contain an electrode active material, a conductive material, and a binder, and the electrode active material may be a positive electrode active material or a negative electrode active material.

In the present invention, the positive electrode active material is a material capable of causing an electrochemical reaction and a lithium transition metal oxide, and contains two or more transition metals. Examples thereof include: layered compounds such as lithium cobalt oxide (LiCoO₂) and lithium nickel oxide (LiNiO₂) substituted with one or more transition metals; lithium manganese oxide substituted with one or more transition metals; lithium nickel oxide represented by the formula LiNi_{1-y}M_{y}O₂ (wherein M = Co, Mn, Al, Cu, Fe, Mg, B, Cr, Zn or Ga and contains at least one of the above elements, 0.01 ≦ y ≦ 0.7); lithium nickel cobalt manganese composite oxide represented by the formula Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂, Li_{1+z}Ni_{0.4}Mn_{0.4}Co_{0.2}O₂ etc. (wherein - 0.5≤z≤0.5, 0.1≤b≤0.8, 0.1≤c≤0.8, 0≤d≤0.2, 0≤e≤0.2, b+c+d<1, M = Al, Mg, Cr, Ti, Si or Y, and A = F, P or Cl); olivine-based lithium metal phosphate represented by the formula Li₁₊ₓM_{1-y}M'_{y}PO_{4-z}X_{z} (wherein M = transition metal, preferably Fe, Mn, Co or Ni, M'= Al, Mg or Ti, X = F, S or N, and -0.5≤x≤0.5, 0≤y≤0.5, 0≤z≤0.1).

Examples of the negative electrode active material include carbon such as non-graphitized carbon and graphite carbon; metal complex oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, groups 1, 2, and 3 of the periodic table, halogen; 0<x≤1; 1≤y≤3; 1≤z≤8); lithium alloy; silicon alloy; tin alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni-based materials.

The conductive material is usually added in an amount of 1 to 30% by weight based on the total weight of the mixture including the positive electrode active material. Such a conductive material is not particularly limited as long as it has electrical conductivity without causing a chemical change in the battery, and examples thereof include graphite such as natural graphite and artificial graphite; carbon black such as carbon black, acetylene black, Ketjen black, channel black, furnace black, lamp black, and summer black; conductive fibers such as carbon fiber and metal fiber; metal powders such as carbon fluoride, aluminum and nickel powder; conductive whiskey such as zinc oxide and potassium titanate; conductive metal oxides such as titanium oxide; and conductive materials such as polyphenylene derivatives and the like.

The binder is added in an amount of 1 to 30% by weight, on the basis of the total weight of the mixture containing the positive electrode active material, as a component that assists in bonding between the active material and the conductive material and bonding to the current collector. Examples of such binders include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene terpolymer (EPDM), sulfonated EPDM, styrene butylene rubber, fluorine rubber, various copolymers and the like.

The present invention also provides a method for manufacturing a current collector as described above.

FIG. 6 is a flowchart illustrating the order of the method of manufacturing a current collector according to the present invention.

Referring to FIG. 6, a method of manufacturing a current collector according to an embodiment of the present invention includes: preparing a metal foil (S10); forming a primer coating layer by coating a primer composition on at least one surface of the metal foil (S20); and rolling the metal foil having a primer coating layer formed thereon to thereby uniformly planarize a surface of the primer coating layer (S30).

According to the present invention, a primer coating layer is formed on a current collector, and by rolling the primer coating layer, the surface of the primer coating layer is planarized, and the pores inside the primer coating layer may be minimized. Through this, the adhesive force of the interface between the primer coating layer and the electrode active material layer may be improved, and the performance deterioration of the electrode may be prevented.

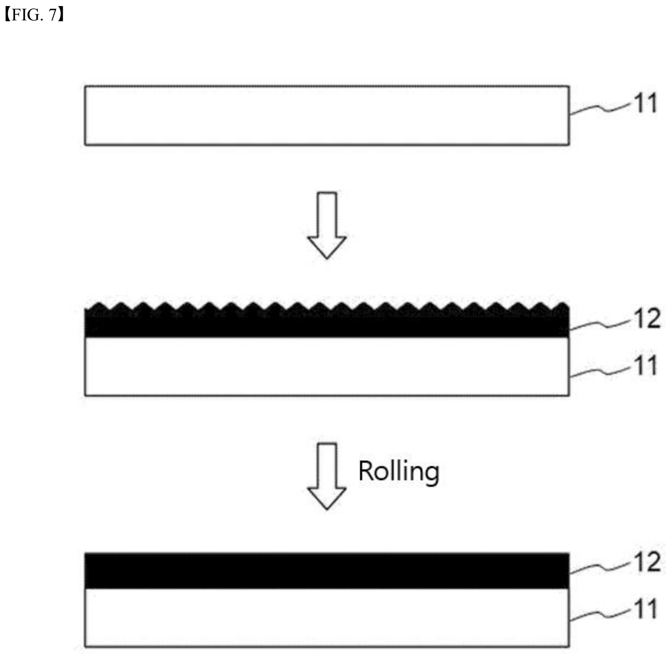

FIG. 7 is a schematic diagram illustrating a method of manufacturing a current collector according to an embodiment of the present invention.

Referring to FIGS. 6 and 7, in the method of manufacturing a current collector according to the present invention, first, a primer coating layer 12 is formed on at least one surface of a metal foil 11. The primer coating layer 12 is formed by coating a primer composition on at least one surface of the metal foil 11. Herein, the primer composition contains a carbon-based material and a binder.

The carbon-based material is not particularly limited as long as it is an element which maintains conductivity by electrically connecting the metal foil 11 to the electrode active material layer. For example, the carbon-based material may be one or more selected from the group consisting of natural graphite, artificial graphite, graphene, carbon black, denka black, acetylene black, ketjen black, super-P, channel black, furnace black, lamp black, summer black, carbon nanotube, graphite nanofiber, and carbon nano fiber.

There is no particular limitation to the type of the binder as long as it can exhibit binding force. For example, the binder may include one or more selected from the group consisting of polyvinylidene fluoride, polyvinyl alcohol, carboxymethylcellulose (CMC), starch, hydroxypropylcellulose (HPC), regenerated cellulose, polyvinylpyrrolidone, polytetrafluoroethylene, polyethylene, polypropylene, ethlylene propylene diene monomer (EPDM), sulfonated EPDM, styrene butadiene, and fluorine rubber.

When the primer composition contains a binder together with a carbon-based material, the weight ratio of the carbon-based material and the binder may be 3: 7 to 7: 3, and specifically 4: 6 to 6: 4. When the weight ratio of the carbon-based material and the binder is in the above range, the electrical conductivity and binding force of the primer coating layer 12 may appropriately be secured.

Further, the primer composition may further contain a dispersant for dispersion of the carbon-based material and inorganic particles for securing additional electrical conductivity.

The primer composition may be applied in the thickness of 0.1 to 10 µm, specifically 0.1 to 5 µm, and more specifically 0.1 to 1 µm. If the thickness is less than the range, binding force cannot be sufficiently secured between the metal foil 11 and the electrode active material layer, and it is difficult to form a uniform layer. On the contrary, if the thickness exceeds the range, the primer coating layer 12 acts as a resistance, thereby deteriorating the electrical performance of the electrode or increasing the volume of the electrode.

A method of forming a coating layer generally used in the related art may be used as the method of forming the primer coating layer. For example, wet coating methods such as gravure coating, slot die coating, spin coating, spray coating, bar coating, and deposition coating; and dry coating methods such as thermal evaporation, e-beam evaporation, chemical vapor deposition (CVD), and sputtering may be used.

If the primer coating layer 12 is formed, the surface of the primer coating layer 12 is planarized by rolling the primer coating layer 12. When a primer coating layer 12 is formed on the metal foil 11, fine irregularities are formed on the surface. At this time, a flat surface may be formed by pressing the fine irregularities by rolling. Namely, the current collector 10 may improve the adhesive force between the primer coating layer 12 and the electrode active material layer by preventing the above fine irregularities from acting as bubbles in a space between the primer coating layer 12 and the electrode active material layer.

Herein, for example, the metal foil 11, where the primer coating layer 12 is formed, may be rolled by a pair of rolling rollers (not shown). Herein, the rolling method is not limited thereto, and various known rolling methods may be used.

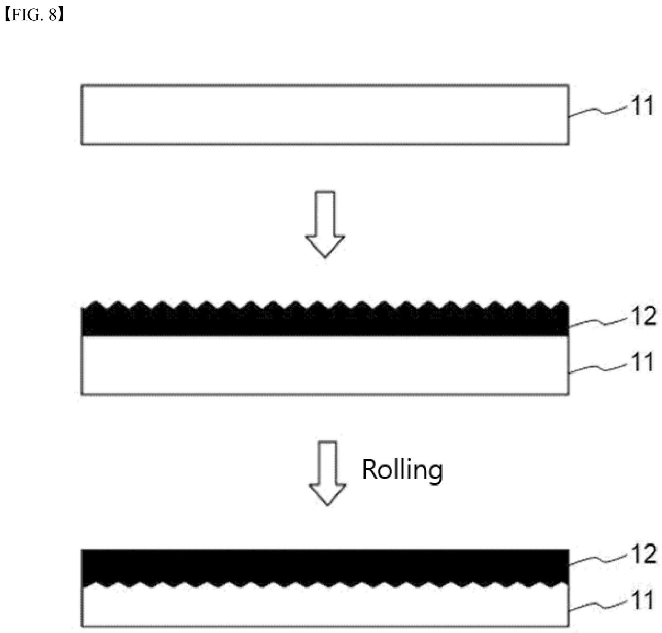

FIG. 8 is a schematic diagram illustrating a method of manufacturing a current collector according to another embodiment of the present invention.

Referring to FIGS. 6 and 8, irregularities (A) may be formed on the surface of the metal foil 11 by rolling the metal foil 11, where the primer coating layer 12 is formed, by appropriate rolling strength. When a metal foil 11, where a primer coating layer 12 is formed, is rolled to planarize the surface of the primer coating layer 12, irregularities (A) may be formed on the surface of the metal foil 11 as particles constituting the primer coating layer 12 press the metal foil 11. As such, irregularities (A) of a predetermined size may be formed on the metal foil 11 by appropriately adjusting the size (e.g., average particle diameter) and strength of particles constituting the primer coating layer 12, that is, the carbon-based material, etc.

The rolling condition for forming irregularities on the surface of the metal foil 11 and planarization of the primer coating layer 12 may be appropriately designed by one of ordinary skill in the art, and the detailed description thereof is as described above.

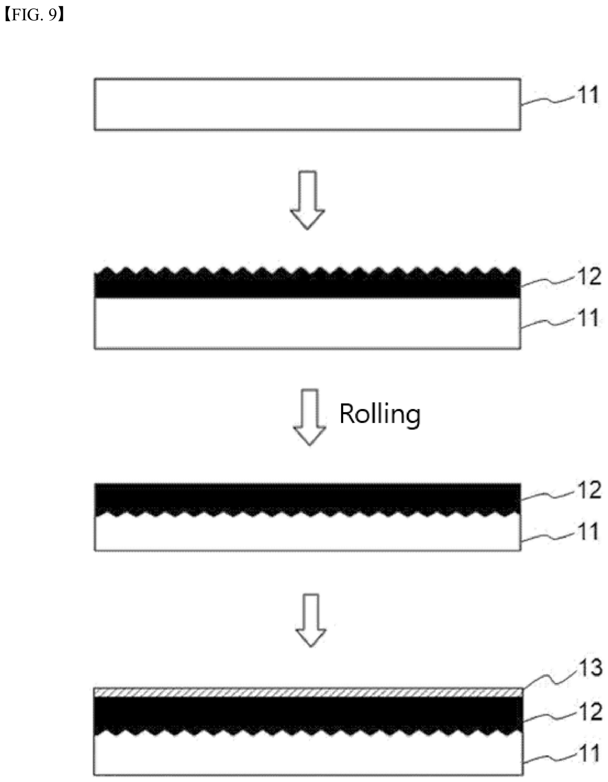

FIG. 9 is a schematic diagram illustrating a method of manufacturing a current collector according to further another embodiment of the present invention.

Referring to FIGS. 6 and 9, the method of manufacturing a current collector according to the present invention further includes forming a binder layer 13 by coating a binder composition on the primer coating layer 12.

The binder composition includes a carbon-based material and a binder. The same as described above may be used as the carbon-based material and the binder, the same as the carbon-based material and the binder used for the primer composition may be used, or different kinds may also be used.

Further, in the binder composition, the weight ratio of the carbon-based material and the binder may be 0: 10 to 7: 3, and specifically 1: 9 to 6: 4. Namely, the binder composition may contain both the carbon-based material and the binder and may contain only the binder. When the weight ratio of the carbon-based material and the binder is in the above range, the electrical conductivity and binding force of the primer coating layer 12 may appropriately be secured. Herein, in order to secure sufficient binding force, the content of the binder is preferably greater than the binder content in the primer composition. Herein, the content of the binder may be a ratio of the weight of the binder to the total weight of each layer.

The binder composition may be applied in the thickness of 0.1 to 5 µm, specifically 0.1 to 3 µm, and more specifically 0.1 to 2 µm. Herein, in this case, in order to secure sufficient electrical conductivity between the metal foil 11 and the primer coating layer 12 and the electrode active material layer, the thickness of the binder layer 13 is preferably smaller than the thickness of the primer coating layer 12. When the thickness of the binder layer 13 is less than the above range, it may be difficult to secure binding force to the electrode active material layer, and when the thickness of the binder layer 13 exceeds the range, it may be difficult to sufficiently secure electrical conductivity between the metal foil 11 and the primer coating layer 12 and the electrode active material layer.

Further, since the binder layer 13 uses a large amount of binder, compared to the primer coating layer 12, the binder layer 13 may reduce the electrical conductivity between the metal foil and primer coating layer 12 and the electrode active material layer. Hence, the binder layer 13 should be formed in the minimum amount for securing the binding force on the primer coating layer 12. As such, the binder composition may be pattern-coated on a part of the primer coating layer 12. Specifically, the binder composition may be coated at a portion which is frequently separated due to weak binding force between the primer coating layer 12 and the electrode active material layer. For example, the binder layer 13 may be pattern-coated at both edge portions of the primer coating layer 12.

Further, the present invention provides a method of manufacturing an electrode, and the method of manufacturing an electrode according to the present invention includes: manufacturing a current collector according to a method of manufacturing a current collector as described above; and forming an electrode active material layer by applying an electrode slurry containing an electrode active material on the current collector. The details about the electrode active material and the electrode slurry are as described above.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims, and all technical ideas within the scope equivalent thereto should be construed as being included in the scope of the present invention.

On the other hand, in this specification, terms indicating directions such as up, down, left, right, before, and after are used, but it is obvious that these terms are for convenience of description only and may change depending on the location of the object or the location of the observer.

### [Description of reference numerals]

1, 20: electrode
2, 10: current collector
3, 11: metal foil
4, 12: primer coating layer
5, 14: electrode active material layer
13: binder layer

### [Item 1]

A current collector comprising:
a metal foil; and
a primer coating layer formed on at least one surface of the metal foil,
wherein a surface of the primer coating layer has a flat surface uniformly planarized by rolling.

### [Item 2]

The current collector of Item 1, wherein the primer coating layer includes a carbon-based material and a binder.

### [Item 3]

The current collector of Item 1, wherein a surface of the metal foil has irregularities formed by a rolling of the primer coating layer.

### [Item 4]

The current collector of Item 1, further comprising a binder layer formed on the primer coating layer.

### [Item 5]

The current collector of Item 4, wherein the binder layer includes a carbon-based material and a binder, and
wherein a binder content of the binder layer is greater than a binder content of the primer coating layer.

### [Item 6]

The current collector of Item 4, wherein a thickness of the binder layer is smaller than a thickness of the primer coating layer.

### [Item 7]

The current collector of Item 4, wherein the binder layer is pattern-formed on a part of the primer coating layer.

### [Item 8]

An electrode having a structure where an electrode active material layer is formed on the current collector according to Item 1.

### [Item 9]

A method of manufacturing a current collector, the method comprising:
preparing a metal foil;
forming a primer coating layer by coating a primer composition on at least one surface of the metal foil; and
rolling the metal foil having a primer coating layer formed thereon to thereby uniformly planarize a surface of the primer coating layer.

### [Item 10]

The method of Item 9, wherein the primer composition includes a carbon-based material and a binder.

### [Item 11]

The method of Item 9, wherein irregularities are formed on a surface of the metal foil by a rolling of the primer coating layer.

### [Item 12]

The method of Item 9, further comprising forming a binder layer by coating a binder composition on the primer coating layer.

### [Item 13]

The method of Item 12, wherein the binder composition includes a carbon-based material and a binder, and
wherein a binder content of the binder composition is greater than a binder content of the primer composition.

### [Item 14]

The method of Item 12, wherein a thickness of the binder layer is smaller than a thickness of the primer coating layer.

### [Item 15]

The method of Item 12, wherein the binder composition is pattern-coated on a part of the primer coating layer.

### [Item 16]

A method of manufacturing an electrode, the method comprising:
manufacturing a current collector according to the method of manufacturing a current collector according to Item 9; and
applying an electrode slurry containing an electrode active material on the current collector to thereby form an electrode active material layer.

## Claims

1. A current collector comprising:
a metal foil; and
a primer coating layer formed on at least one surface of the metal foil,
wherein a surface roughness (Ra) of the primer coating layer is 0.01 to 1 µm.

2. The current collector of claim 1, wherein the primer coating layer includes a carbon-based material and a binder.

3. The current collector of claim 1, wherein a surface of the metal foil has irregularities formed by a rolling of the primer coating layer.

4. The current collector of claim 1, further comprising a binder layer formed on the primer coating layer.

5. The current collector of claim 4, wherein the binder layer includes a carbon-based material and a binder, and
wherein a binder content of the binder layer is greater than a binder content of the primer coating layer.

6. The current collector of claim 4, wherein a thickness of the binder layer is smaller than a thickness of the primer coating layer.

7. The current collector of claim 4, wherein the binder layer is pattern-formed on a part of the primer coating layer.

8. An electrode having a structure where an electrode active material layer is formed on the current collector according to claim 1.

9. A method of manufacturing a current collector, the method comprising:
preparing a metal foil;
forming a primer coating layer by coating a primer composition on at least one surface of the metal foil; and
rolling the metal foil having a primer coating layer formed thereon,
wherein a surface roughness (Ra) of the rolled primer coating layer is 0.01 to 1 µm.

10. The method of claim 9, wherein the primer composition includes a carbon-based material and a binder.

11. The method of claim 9, wherein irregularities are formed on a surface of the metal foil by a rolling of the primer coating layer.

12. The method of claim 9, further comprising forming a binder layer by coating a binder composition on the primer coating layer.

13. The method of claim 12, wherein the binder composition includes a carbon-based material and a binder, and
wherein a binder content of the binder composition is greater than a binder content of the primer composition.

14. The method of claim 12, wherein a thickness of the binder layer is smaller than a thickness of the primer coating layer.

15. The method of claim 12, wherein the binder composition is pattern-coated on a part of the primer coating layer.

16. A method of manufacturing an electrode, the method comprising:
manufacturing a current collector according to the method of manufacturing the current collector according to claim 9; and
applying an electrode slurry containing an electrode active material on the current collector to thereby form an electrode active material layer.
